# EUROPEAN PATENT SPECIFICATION

(11) **EP 3 393 248 B1**
(45) Date of publication and mention of the grant of the patent: **14.08.2019**
(21) Application number: 16829121.9
(22) Date of filing: 20.12.2016
(51) Int. Cl.: A01N 59/20, A01N 37/40, A01N 25/12, A01N 25/14, A01P 1/00

(54) **USE OF CRYSTALLINE FORMS OF COPPER SALICYLATE FOR THE CONTROL OF PHYTOPATHOGENIC BACTERIA**
VERWENDUNG KRISTALLINER FORMEN VON KUPFERSALICYLAT ZUR BEKÄMPFUNG PHYTOPATHOGENER BAKTERIEN
UTILISATION DE FORMES CRISTALLINES DU SALICYLATE DE CUIVRE POUR LA LUTTE CONTRE LES BACTÉRIES PHYTOPATHOGÈNES

(30) Priority: 24.12.2015 IT UB20159406
(43) Date of publication of application: 31.10.2018
(73) Proprietor: ISAGRO S.p.A., 20153 Milano (IT)
(72) Inventor: BELLANDI, Paolo, 17043 Carcare (SV) (IT); GUSMEROLI, Marilena, 20900 Monza (MB) (IT); MORMILE, Silvia, 28100 Novara (NO) (IT); LIGUORI, Riccardo, 20900 Monza (MB) (IT); BADARACCO, Christian, 20010 Vittuone (MI) (IT); VAZZOLA, Matteo, 20815 Cogliate (MB) (IT)
(74) Representative: De Gregori, Antonella
(86) International application number: PCT/IB2016/057819
(87) International publication number: WO 2017/109694

(56) References cited:
- WO-A1-2010/076038
- WO-A1-2014/164694
- FR-A- 572 758
- US-A1- 2009 136 581
- Yang Yi-Yong ET AL: "Rheological phase synthesis and characterization of copper monosalicylate", Wuhan University Journal of Natural Sciences, 1 June 2003 (2003-06-01), pages 425-427, XP055271754, Wuhan DOI: 10.1007/BF02907224 Retrieved from the Internet: URL:http://download.springer.com/static/pd f/472/art%3A10.1007%2FBF02907224.pdf?origi nUrl=http://link.springer.com/article/10.1 007/BF02907224&token2=exp=1462954586~acl=/ static/pdf/472/art%253A10.1007%252FBF02907 224.pdf?originUrl=http%3A%2F%2Flink.spring er.com%2Farticle%2F10.1007%2FBF02907224*~h mac=8ba784 [retrieved on 2016-05-11]
- YOSHIMURA, YOSHITAKE; OKI, HISAYA; TSUCHIYA, RYOKICHI: "CONDITIONS FOR CRYSTALLIZATION OF VARIOUS COPPER(II) COMPLEXES OF SALICYLIC ACID IN AQUEOUS SOLUTION", NIPPON KAGAKU KAISHI, vol. 4, 1 April 1979 (1979-04-01), pages 502-505, XP009190004, JAPAN

## Description

The present invention relates to the non-therapeutic use of crystalline forms of copper salicylate having a bactericidal activity, and agronomical compositions containing them, for the control of phytopathogenic bacteria.

### State of the art

Bacterioses are plant diseases caused by phytopathogenic bacteria. The bacteria can strike any type of plant, even if the most common bacterial diseases relate to some ornamental species, fruit trees such as olive trees, kiwi trees and apricot trees, as well as tomatoes, citrus fruits and garlic.

Unlike fungi, these infectious agents are not capable of actively penetrating the walls of the epidermal tissues of plants. Their entry and attack consequently occurs in points where the barriers formed by the epidermal tissues of the plants, are naturally or occasionally interrupted, such as, for example, under excessive wetting conditions of the locations or in the case of incorrect grafting.

Bacterioses can not only cause the death of the plant, but also a whole series of correlated diseases, such as tumours, that lead to the drying of the plant structure and subsequently to the death of the species affected. In order to combat the spreading of the disease, symptomatic plants are eradicated and various preventive interventions are effected with fertilizers and/or bio-stimulants.

Very frequently, however, these interventions are not sufficient for effectively controlling the disease, thus making it necessary to combat bacterial diseases by the application of specific agrochemicals. For this purpose, recalling that in Italy, since 1971, resort can no longer be made to the use of antibiotics, such as streptomycin or tetracycline, plants are normally treated with resistance-inducer active principles and/or with classical cupric compounds, such as copper hydroxide, possibly combined with some carboxylic acids, as indicated in patent application US2009/136581, which however can prove to be phytotoxic at high dosages.

The Applicant previously found that a resistance inducer, salicylic acid, or functional derivatives thereof, synergizes with products having a direct fungicidal activity. In particular, some patents relates to inorganic copper compounds that effectively synergize with cupric salts of derivatives of salicylic acid, as described and claimed in international patent application WO03/043971. Basic copper salicylate, a cupric salt of salicylic acid, was previously indicated in patent FR572758 for use against fungal diseases.

As described in the subsequent patent application WO2005/094580, however, an important limitation in the use of cupric salts of derivatives of salicylic acid alone is linked to the risk that this use can cause undesired side-effects, which negatively influence the quality and quantity of the crop treated.

Furthermore, from a legislative point of view, the quantities of copper admissible in agriculture are becoming increasingly reduced. This is clearly linked to the high environmental impact of heavy metals, whose use is therefore becoming more and more limited.

Hydrated crystalline forms of copper monosalicylate and the relative preparation method have also been described in literature, such as, for example, in Wuhan University Journal of Natural Sciences, 2003, 425-427 and in Nippon Kagaku Kaishi, 1979, 4, 502-505. No biological activity correlated with the above-mentioned crystalline forms, however, has ever been mentioned.

The necessity is therefore particularly felt for finding alternative treatment capable of effectively limiting bacterioses, also at low dosages, which at the same time, can be well tolerated by agrarian crops.

The Applicant has now surprisingly found that copper salicylate, in certain crystalline forms, is capable of controlling bacterioses in plants, without causing undesired phytotoxicity effects.

An object of the present invention therefore relates to the non-therapeutic use of at least one crystalline form of copper salicylate, with a molar ratio between copper and salicylic acid of (1:1), selected from crystalline form I, crystalline form II or crystalline form III and/or relative mixtures; wherein crystalline form I is characterized by an orthorhombic crystalline structure, a crystal unit cell indicated in Table 1 hereunder, a FTIR spectrum that has at least the absorption bands indicated in Table 2 hereunder, an XRD spectrum that has at least the characteristic peaks indicated in Table 3 hereunder and, preferably, a particle-size distribution ranging from 1.95 µm to 19.40 µm, preferably equal to about 6.17 µm; wherein crystalline form II is characterized by a triclinic crystalline structure, a crystal unit cell indicated in Table 1 hereunder, a FTIR spectrum that has at least the absorption bands indicated in Table 2 hereunder, an XRD spectrum that has at least the characteristic peaks indicated in Table 3 hereunder and, preferably, a particle-size distribution ranging from 15.37 µm to 100.30 µm, preferably equal to about 49.45 µm; wherein crystalline form III is characterized by a two-dimensional crystalline structure, a crystal unit cell indicated in Table 1 hereunder, a FTIR spectrum that has at least the absorption bands indicated in Table 2 hereunder, an XRD spectrum that has at least the characteristic peaks indicated in Table 3 hereunder

**Table 1**

| Crystalline form | a, Å | b, Å | c, Å | α, ° | β, ° | γ, ° | V, Å³ | Z | V/Z, Å³ |
|---|---|---|---|---|---|---|---|---|---|
| I | 18.868 | 15.884 | 5.042 | 90 | 90 | 90 | 1507 | 8 | 188 |
| II | 7.322 | 10.677 | 15.580 | 70.67 | 83.82 | 76.31 | 1116.09 | 6 | 186 |
| III | 24.46 | - | 5.66 | - | 90 | - | - | - | - |

**Table 2**

| Crystalline form I | Crystalline form II | Crystalline form III |
|---|---|---|
| 3244.25 | 3371.87 | 3252.77 |
| 2929.28 | 3065.63 | 3067.12 |
| 1603.68 | 1623.17 | 2925.20 |
| 1558.03 | 1604.97 | 1603.32 |
| 1496.27 | 1590.00 | 1572.60 |
| 1470.55 | 1570.31 | 1558.81 |
| 1407.99 | 1472.32 | 1507.33 |
| 1248.06 | 1408.52 | 1471.60 |
| | 1253.54 | 1258.08 |

**Table 3**

| Crystalline form I (2θ, °) | Crystalline form II (2θ, °) | Crystalline form III (2θ, °) |
|---|---|---|
| 9.420 | 6.034 | 7.283 |
| 22.638 | 17.171 | 20.759 |
| 26.512 | 18.103 | 25.867 |
| 28.296 | 25.033 | - |
| 29.575 | 25.968 | - |
| - | 27.458 | - |

for the control of phytopathogenic bacteria.

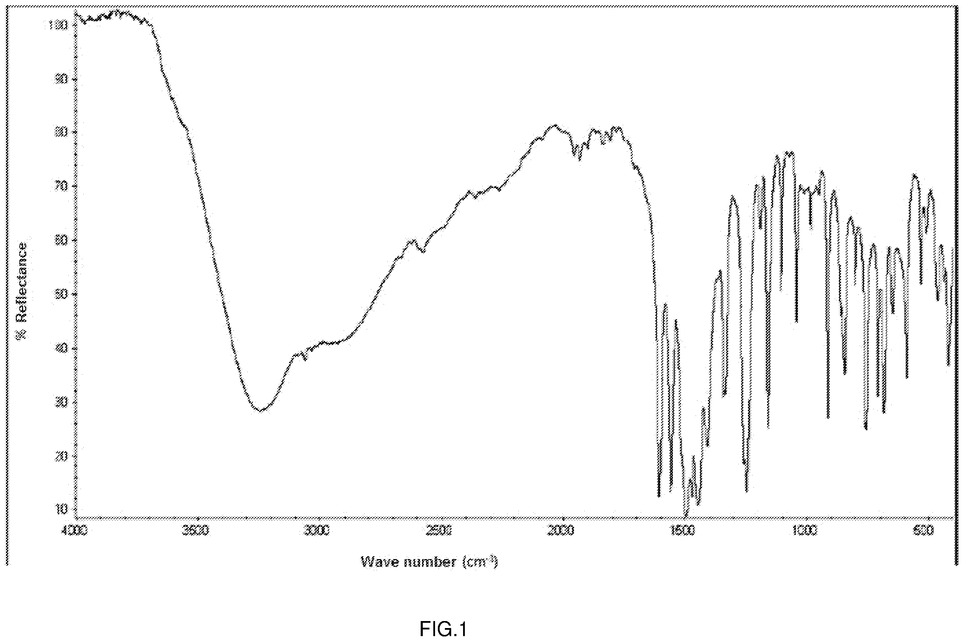

The crystalline form I of copper salicylate is characterized by a FTIR spectrum, having, as main absorption bands, the bands indicated in the above table, and substantially represented in Figure 1 (FTIR spectrum of the crystalline form I of copper salicylate).

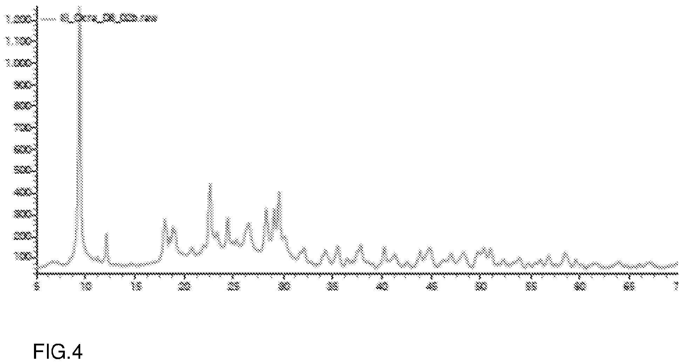

Said crystalline form I of copper salicylate is also characterized by an XRD spectrum having, as characteristic peaks, the peaks indicated in the above table, and substantially represented in Figure 4 (XRD spectrum of the crystalline form I of copper salicylate).

Said crystalline form I of copper salicylate preferably has a very fine particle size. The particle-size distribution ranges from 1.95 µm to 19.40 µm, and is preferably equal to about 6.17 µm.

As can be observed from the FTIR spectrum in Figure 1, the crystalline form I is characterized by the presence of [Ph(OH)CO₂]⁻ tridentate ions, bridge-coordinated with Cu(II) ions through the oxygen atoms of the carboxylate and undissociated phenolic oxygen. The small separation between the asymmetric stretching and symmetric stretching of the carboxyl bands indicates a bridge configuration of the carboxylate group between various Cu(II) centres. Furthermore, the copper ions carry a hydroxyl, interacting via hydrogen bonding with the surroundings.

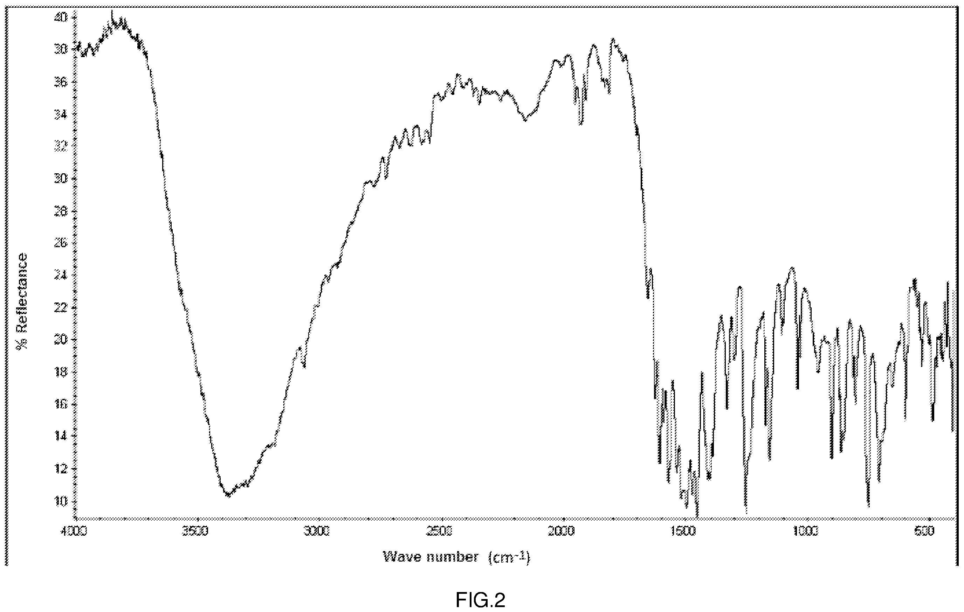

The crystalline form II of copper salicylate is characterized by a FTIR spectrum, having, as main absorption bands, the bands indicated in the previous table, and substantially represented in Figure 2 (FTIR spectrum of the crystalline form II of copper salicylate).

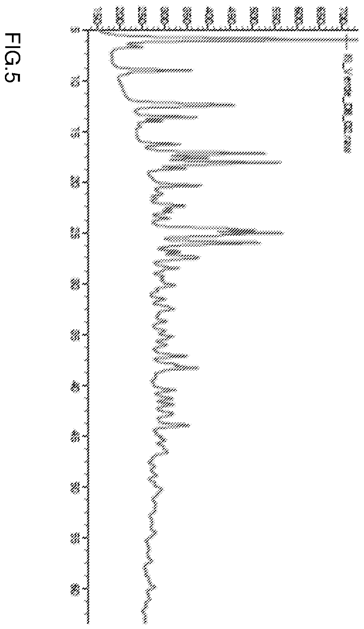

Said crystalline form II of copper salicylate is also characterized by an XRD spectrum having, as characteristic peaks, the peaks indicated in the above table, and substantially represented in Figure 5 (XRD spectrum of the crystalline form II of copper salicylate).

Said crystalline form II of copper salicylate according to the present invention, preferably has a rougher particle size. The particle-size distribution ranges from 15.37 µm to 100.30 µm, and is preferably equal to about 49.45 µm.

As can be seen from the FTIR spectrum in Figure 2, crystalline form II is characterized by [Ph(OH)CO₂]⁻tridentate ions, coordinated through dissociated phenolic oxygen and with the monodentate, bidentate and/or chelated carboxylate group bridge-coordinated between multiple cupric sites. The presence of hydroxyl groups coordinated with Cu(II) ions and interacting through a hydrogen bond, can also be observed.

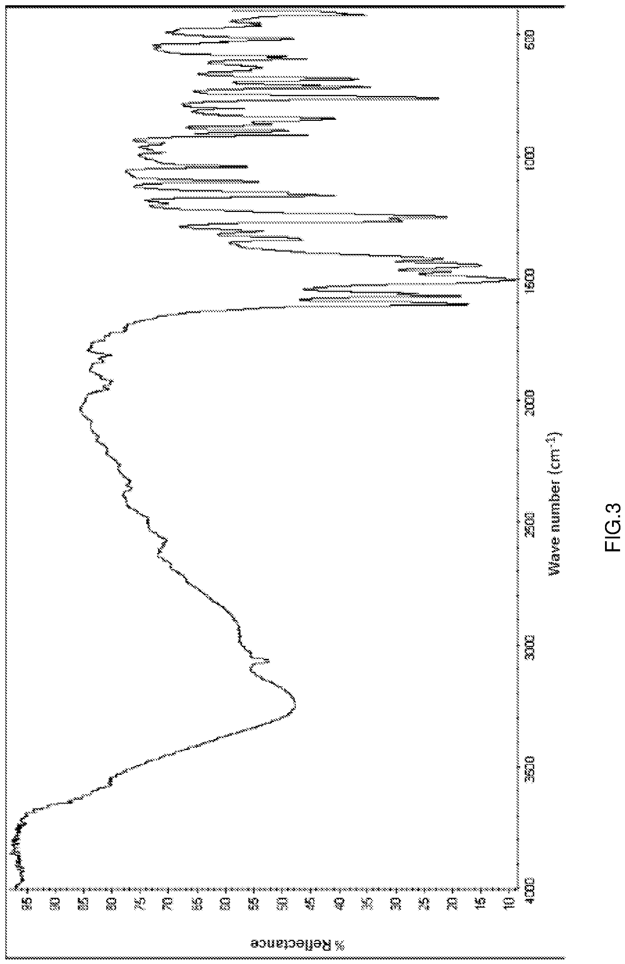

The crystalline form III of copper salicylate is characterized by a FTIR spectrum, having, as main absorption bands, the bands indicated in the previous table, and substantially represented in Figure 3 (FTIR spectrum of the crystalline form III of copper salicylate).

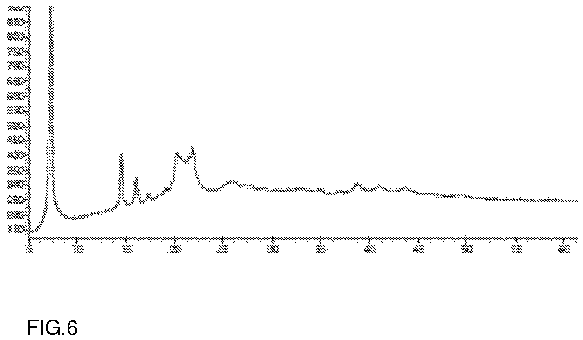

Said crystalline form III of copper salicylate is also characterized by an XRD spectrum having, as characteristic peaks, the peaks indicated in the above table, and substantially represented in Figure 6 (XRD spectrum of the crystalline form III of copper salicylate).

Preferred crystalline forms for the control of phytopathogenic bacteria are form I, form II and mixtures of crystalline form I and crystalline form II.

Said crystalline forms can be prepared according to methods well-known to skilled persons in the field, such as those indicated for example in WO2010/076038 for the above-mentioned crystalline form I, in Wuhan University Journal of Natural Sciences, 2003, 425-427 for the above-mentioned crystalline form II, or in Nippon Kagaku Kaishi, 1979, 4, 502-505 for the above-mentioned crystalline form III.

Copper salicylate, when used in one of the above-mentioned three crystalline forms I, II, III, or mixtures thereof, allows excellent levels of effectiveness to be obtained at particularly reduced doses of copper metal with respect to other commercial reference products such as copper hydroxide (Kocide® 3000).

As is evident from the results indicated in Example 9 below, on comparing the activity of copper salicylate in crystalline form I with the activity of commercial copper hydroxide, it can be observed that the crystalline form I according to the invention is much more active than the commercial product on bacteriosis of tomato plants. Furthermore, the above crystalline form I is also more persistent with intervals of 10 days between one treatment of the crop and the subsequent treatment, with respect to copper hydroxide with intervals of 7 days between one treatment and another.

As already specified, the crystalline forms I, II and III of copper salicylate have a high bactericidal activity and do not show any phytotoxicity with respect to the crops of application. These characteristics make them particularly suitable for use in the agrarian field in defense against bacteria.

Examples of bacteria that can be effectively reduced with the crystalline forms I, II and III of copper salicylate are *Pseudomonas syringae pv tomato* of tomato plants, *Pseudomonas syringae pv actinidiae* of kiwi plants, *Pseudomonas lachrymans* of cucurbits, *Xanthomonas campestris pv camyestris* of lettuces, *Pseudomonas viridiflava* of vegetables, *Xanthomonas juglandis* of walnut trees, *Xylella fastidiosa* of olive trees, etc.

The three crystalline forms of copper salicylate according to the present invention can also be validly used in the control of phytopathogenic fungi. Examples of fungi that can be effectively controlled with the crystalline forms I, II and III of copper salicylate are *Plasmoyara viticola* of vines, *Phytopthora infestans* of tomato and potato plants, *Uromyces appendiculatus* on beans, *Erysiphe cichoracearum* on cucumbers, *Fusicoccum amygdale* of peach trees, *Cercospora beticola* of sugar beet, *Uncinula necator* of vines, *Bremia lactucae* of lettuces, etc.

For practical uses in agriculture, it is often preferable to use copper salicylate suitably formulated in agronomic compositions comprising one or more crystalline forms of the present invention and agronomically acceptable coformulants.

As previously indicated, the present invention also relates to the use of bactericidal agronomic compositions comprising one or more crystalline forms I, II and III of copper salicylate, a solvent and/or diluent, possibly one or more surfactants and other agronomically acceptable coformulants.

Compositions can be used in the form of dry powders, wettable powders, emulsifiable concentrates, microemulsions, pastes, granulates, solutions, suspensions, etc.: the choice of the type of composition depends on the specific use.

The compositions are prepared according to known methods, for example by diluting or dissolving the active substance with a solvent medium and/or solid diluent, possibly in the presence of surfactants.

Kaolin, alumina, silica, talc, bentonite, gypsum, quartz, dolomite, attapulgite, montmorillonite, diatomaceous earth, cellulose, starch, etc.., can be used as inert solid diluents, or carriers.

Inert liquid diluents that can be used are water, or organic solvents such as aromatic hydrocarbons (xylols, blends of alkyl benzenes, etc.), aliphatic hydrocarbons (hexane, cyclohexane, etc.) halogenated aromatic hydrocarbons (chlorobenzene, etc.), alcohols (methanol, propanol, butanol, octanol, etc.), esters (isobutyl acetate, etc.), ketones (acetone, cyclohexanone, acetophenone, isophorone, ethylamylketone etc.), or vegetable or mineral oils or mixtures thereof, etc.

Propellant gases such as butane, propane, halogenated hydrocarbons, nitrogen or carbon dioxide can be used as liquefied diluents or liquefied substances that gasify at room temperature and atmospheric pressure.

Surfactants that can be used are wetting and emulsifying agents of the non-ionic type (polyethoxylated alkyl phenols, polyethoxylated fatty alcohols, etc.), of the anionic type (alkylbenzenesulfonates, alkylsulfonates, etc.), of the cationic type (alkyl ammonium quaternary salts, etc.).

Dispersing agents can also be added (for example lignin and its salts, cellulose derivatives, alginates, etc..), stabilizers (for example antioxidants, UV absorbers, etc.).

The concentration of copper salicylate in the above compositions can vary within a wide range and depends on various factors. It varies in relation to the crystalline form of copper salicylate, the applications for which said compositions are destined, the environmental conditions and the type of formulation adopted. The concentration of copper salicylate generally ranges from 0.1 to 90% by weight with respect to the total weight of the composition, preferably from 0.5 to 90% by weight.

The crystalline forms employed in the present invention as such or formulated can be used in a mixture with other active principles such as, for example, insecticides, acaricides, nematocides, herbicides, fungicides, bactericides different from copper salicylate, fertilizers, biostimulants, etc. for broadening their spectrum or preventing resistance.

Said agronomic compositions can comprise a crystalline form I, II and III of copper salicylate and/or mixtures thereof and at least a second active principle selected from insecticides, acaricides, nematocides, herbicides, fungicides, bactericides different from copper salicylate, fertilizers, biostimulants.

In some cases, the mixtures thus obtained have a synergistic effect between the components, which causes the mixture, for example, to exert a higher activity with respect to that of the single elements of which it is composed.

Examples of insecticides, acaricides, nematocides that can be added to the compositions containing at least one crystalline form of copper salicylate are the following: abamectin, acetamiprid, acrinathrin, alphacypermethrin, alphamethrin, azadirachtin, Bacillus subtilis, Bacillus thuringiensis, Beauveria bassiana, betacyfluthrin, bifenazate, bifenthrin, buprofezin, chlorpyrifos, chlorpyrifos M, clofentezine, cyhalothrin, cyhexatin, cypermethrin, cyromazine, chloropicrin,clorantranilipide, clotianidin, deltamethrin, diflubenzuron, dimethoat, dazonet, sulfuryl difluoride, dimethyldisulfide, emamectin, esfenvalerate, ethoprophos, etofenprox, etoxazole, fenamiphos, fenazaquin, fenoxycarb, fenpyroximate, fipronil, fluazinam, flufenoxuron, fluvalinate, fosthiazate, formentanate, flonicamid, formet, viruses, hexythiazox, imidaclopridi, indoxacarb, lambda-cyhalothrin, lufenuron malathion, metaldehyde, methamidophos, Metharhizium spp, methiocarb, methomyl, methoxyfenozide, milbemectin, metaflumizone, metam sodium, metam potassium, oxamyl, Paecilomyces fumosoroseus, phosmet, pirimicarb, pirimiphos M, pyrethrum, pyridaben, pyriproxyfen, piperonyl butoxide, spinosad, spironesifen, spirotetramat, spinetoran, spirodiclofen, taufluvalinate, tebufenozide, tebufenpyrad, teflubenzuron, tefluthrin, thiacloprid, triflumuron, zeta-cypermethrin, (1R-cis)-[5-(phenylmethyl)-3-furanyl]-methyl-3-[(dihydro-2-oxo-3(2H)-furanylidene) methyl]-2,2-dimethyl-cyclopropane-carboxylate, (3-phenoxyphenyl)-methyl-2,2,3,3-tetra-methylcyclopropanecarboxylate, 1-[(2-chloro-5-thiazolyl)methyl]-5-triazine 2-(1H)-imine, 2-(2-chloro-6-fluorophenyl)-4-[4-(1,1-dimethylethyl)-phenyl]-4,5-dihydro-oxazol, 2-(acetyloxy)-3-dodecyl-1,4-naph-thalenedione, 2-chloro-N-[[[4-(1-phenylethoxy)-phenyl]-amino]-carbonyl]-benzamide, 2-chloro-N-[[[4-(2,2-dichloro-1,1-difluoroethoxy)-phenyl]-amino]-carbonyl]-benzamide, 3-methylphenyl-propylcarbamate, 4-[4-(4-ethoxyphenyl)-4-methylpentyl]-1-fluoro-2-phenoxy-benzene, 4-chloro-2-(1,1-dimethylethyl)-5-[[2-(2,6-dimethyl-4-phenoxyphenoxy)ethyl]thio]-3-(2H)-pyrid-azinone, 4-chloro-2-(2-chloro-2-methylpropyl)-5-[(6-iodo-3-pyridinyl)(2-chloro-2-methylpropyl)-5-[(6-iodo-3-pyridinyl)-methoxy]-3-(2H)pyridazinone, 4-chloro-5-[(6-chloro-3-pyridinyl)methoxy]-2-(3,4-dichloro-phenyl)-3(2H)pyridazinone, Bacillus thuringiensis strain EG-2348, [2-benzoyl-1-(1,1-dimethylethyl)-hydrazine] benzoic acid, 2,2-dimethyl-3-(2,4-dichlorophenyl)-2-oxo-1-oxaspiro [4.5]-dec-3-en-4-yl butanoate, [3-[(6-chloro-3-pyridinyl)-methyl]-2-thiazolidinylidene]-cyanamide, dihydro-2-(nitro-methylene)-2H-1,3-thiazine-3(4H)-carboxaldehyde, ethyl[2-[[1,6-dihydro-6-oxo-1-(phenylmethyl)-4-pyrid-azinyl]oxy]ethyl]-carbamate, N-(3,4,4-trifluoro-1-oxo-3-butenyl)-glycine, N-(4-chlorophenyl)-3-[4-(difluoro-methoxy)-phenyl]-4,5-dihydro-4-phenyl-1H-pyrazole-1-carboxamide, N-[(2-chloro-5-thiazolyl)-methyl]-N'-methyl-N"-nitro-guanidine, N-niethyl-N'-(1-methyl-2-propenyl)-1,2-hydrazinedicarbothioamide, N-methyl-N'-2-propenyl-1,2-hydrazinedicarbothioamide, O,O-diethyl[2-(dipropylamino)-2-oxoethyl]-ethyl-phosphoroamido-thioate.

Examples of herbicides that can be added to the compositions containing at least one crystalline form I, II or III of copper salicylate are the following: acetochlor, acifluorfen, aclonifen, AKH-7088 ({methyl (E,Z)-[[[1-[2-chloro-4-(trifluoromethyl)phenoxy]-2-nitrophenyl]-2-methoxyethylidene] amino] acetate }), alachlor, alloxydim, ametryn, amicarbazone, amidosulfuron, amitrole, anilofos, asulam, atrazine, azafenidin, azimsulfuron, aziprotryne, BAY MKH 6561 (methyl 2-([[(4-methyl-5-oxo-3-propoxy-4,5-dihydro-1H-1,2,4-triazol-1-yl)carbonyl]amino}sulfonyl)benzoate sodium salt), beflubutamid, benazolin, benfluralin, benfuresate, bensulfuron, bensulide, bentazone, benzfendizone, benzobicyclon, benzofenap, benzthiazuron, bifenox, bilanafos, bispyribac-sodium, bromacil, bromobutide, bromofenoxim, bromoxynil, butachlor, butafenacil, butamifos, butenachlor, butralin, butroxydim, butylate, cafenstrole, carbetamide, carfentrazone-ethyl, chlomethoxyfen, chloramben, chlorbromuron, chlorbufam, chlorflurenol, chloridazon, chlorimuron, chlornitrofen, chlorotoluron, chloroxuron, chlorpropham, chlorsulfuron, chlorthal, chlorthiamid, cinidon ethyl, cinmethylin, cinosulfuron, clethodim, clodinafop, clomazone, clomeprop, clopyralid, cloransulam-methyl, cumyluron (JC-940), cyanazine, cycloate, cyclosulfamuron, cycloxydim, cyhalofop-butyl, 2,4-D, 2,4-DB, daimuron, dalapon, desmedipham, desmetryn, dicamba, dichlobenil, dichlorprop, dichlorprop-P, diclofop, diclosulam, diethatyl, difenoxuron, difenzoquat, diflufenican, diflufenzopyr, dimefuron, dimepiperate, dimethachlor, dimethametryn, dimethenamid, dinitramine, dinoseb, dinoseb acetate, dinoterb, diphenamid, dipropetryn, diquat, dithiopyr, 1-diuron, eglinazine, endothal, EPTC, esprocarb, ethalfluralin, ethametsulfuron-methyl, ethidimuron, ethiozin (SMY 1500), ethofumesate, ethoxyfen-ethyl (HC-252), ethoxysulfuron, etobenzanid (HW 52), fenoxaprop, fenoxaprop-P, fentrazamide, fenuron, flamprop, flamprop-M, flazasulfuron, florasulam, fluazifop, fluazifop-P, fluazolate (JV 485), flucarbazone-sodium, fluchloralin, flufenacet, flufenpyr ethyl, flumetsulam, flumiclorac-pentyl, flumioxazin, flumipropin, fluometuron, fluoroglycofen, fluoronitrofen, flupoxam, flupropanate, flupyrsulfuron, flurenol, fluridone, flurochloridone, fluroxypyr, flurtamone, fluthiacet-methyl, fomesafen, foramsulfuron, fosamine, furyloxyfen, glufosinate, glyphosate, halosulfuron-methyl, haloxyfop, haloxyfop-P-methyl, hexazinone, imazamethabenz, imazamox, imazapic, imazapyr, imazaquin, imazethapyr, imazosulfuron, indanofan, iodosulfuron, ioxynil, isopropalin, isoproturon, isouron, isoxaben, isoxachlortole, isoxaflutole, isoxapyrifop, KPP-421, lactofen, lenacil, linuron, LS830556 [[[2-methyl(methylsulfonyl)amino]-2-oxoethyl]amino]-methylphosphonic acid, MCPA 2-methyl-4-chlorophenoxyacetic acid, MCPA-thioethyl, MCPB (4-(4-chloro-2-methylphenoxy)butanoic acid), mecoprop, mecoprop-P, mefenacet, mesosulfuron, mesotrione, metamitron, metazachlor, methabenzthiazuron, methazole, methoprotryne, methyldymron, metobenzuron, metobromuron, metolachlor, S-metolachlor, metosulam, metoxuron, metribuzin, metsulfuron, molinate, monalide, monolinuron, naproanilide, napropamide, naptalam, NC-330 (methyl 5-[(4,6-dimethylpyrimidin-2-yl)carbamoyl-sulfamoyl]1-pyridin-2-yl pyrazol-4-carboxylate), neburon, nicosulfuron, nipyraclofen, norflurazon, orbencarb, oryzalin, oxadiargyl, oxadiazon, oxasulfuron, oxaziclomefone, oxyfluorfen, paraquat, pebulate, pendimethalin, penoxsulam, pentanochlor, pentoxazone, pethoxamid, phenmedipham, picloram, picolinafen, piperophos, pretilachlor, primisulfuron, prodiamine, profluazol, proglinazine, prometon, prometryne, propachlor, propanil, propaquizafop, propazine, propham, propisochlor, propyzamide, prosulfocarb, prosulfuron, pyraclonil, pyraflufen-ethyl, pyrazogyl (HSA-961), pyrazolynate, pyrazosulfuron, pyrazoxyfen, pyribenzoxim, pyributicarb, pyridafol, pyridate, pyriftalid, pyriminobac-methyl, pyrithiobac-sodium, pyroxasulfone quinclorac, quinmerac, quizalofop, quizalofop-P, rimsulfuron, sethoxydim, siduron, simazine, simetryn, sulcotrione, sulfentrazone, sulfometuron-methyl, sulfosulfuron, 2,3,6-TBA, TCA-sodium, tebutam, tebuthiuron, tepraloxydim, terbacil, terbumeton, terbuthyl-azine, terbutryn, thenylchlor, thiazafluron, thiazopyr, thidiazimin, thifensulfuron-methyl, thiobencarb, tiocarbazil, tioclorim, tralkoxydim, tri-allate, triasulfuron, triaziflam, tribenuron, triclopyr, trietazine, trifloxysulfuron, trifluralin, triflusulfuron-methyl, tritosulfuron, UBI-C4874 (quizalofop-P), vernolate.

Examples of fungicides that can be added to the compositions containing at least one crystalline form I, II or III of copper salicylate are the following: acibenzolar, ametoctradin, amisulbrom, ampropylfos, anilazine, azaconazole, azoxystrobin, benalaxyl, benalaxyl-M, benomyl, benthiavalicarb, bitertanol, bixafen, blasticidin-S, boscalid, bromuconazole, bupirimate, buthiobate, captafol, captan, carbendazim, carboxin, carpropamid, chinomethionat, chloroneb, chlorothalonil, chlozolinate, cyazofamid, cyflufenamid, cymoxanil, cyproconazole, cyprodinil, debacarb, dichlofluanid, dichlone, diclobutrazol, diclomezine, dicloran, diclocymet, diethofencarb, difenoconazole, diflumetorim, dimethirimol, dimethomorph, dimoxystrobin, diniconazole, dinocap, dipyrithione, ditalimfos, dithianon, dodemorph, dodine, edifenphos, epoxiconazole, etaconazole, ethaboxam, ethirimol, ethoxyquin, etridiazole, famoxadone, fenamidone, fenaminosulf, fenapanil, fenarimol, fenbuconazole, fenfuram, fenhexamid, fenoxanil, fenpiclonil, fenpropidin, fenpropimorph, fenpyrazamine, fentin, ferbam, ferimzone, fluazinam, fludioxonil, fluindapyr ((*RS*)-3-(difluoromethyl)-*N*-(7-fluoro-2,3-dihydro-1,1,3-trimethyl-1*H*-inden-4-yl)-1-methyl-1*H*-pyrazole-4-carboxamide), flumetover, flumorph, fluopicolide, fluopyram, fluoroimide, fluotrimazole, fluoxastrobin, fluquinconazole, flusilazole, flusulfamide, flutianil, flutolanil, flutriafol, fluxapyroxad, folpet, fosetyl-aluminium, fuberidazole, furalaxyl, furametpyr, furconazole, furconazole-cis, guazatine, hexaconazole, hymexazol, hydroxyquinoline sulfate, imazalil, imibenconazole, iminoctadine, ipconazole, iprobenfos, iprodione, isoprothiolane, iprovalicarb, isopyrazam, isotianil, kasugamycin, kresoxim-methyl, mancopper, mancozeb, mandipropamid, maneb, mebenil, mepanipyrim, mepronil, meptyldinocap, metalaxyl, metalaxyl-M, metconazole, methfuroxam, metiram, metominostrobin, metrafenone, metsulfovax, myclobutanil, natamycin, nicobifen, nitrothal-isopropyl, nuarimol, ofurace, orysastrobin, oxadixyl, oxpoconazole, oxycarboxin, pefurazoate, penconazole, pencycuron, penflufen, pentachlorofenol and its salts, penthiopyrad, phthalide, picoxystrobin, piperalin, Bordeaux mixture, polyoxins, probenazole, prochloraz, procymidone, propamocarb, propiconazole, propineb, proquinazid, prothiocarb, prothioconazole, pyracarbolid, pyraclostrobin, pyrametostrobin, pyraoxystrobin, pyrazophos, pyribencarb, pyrifenox, pyrimethanil, pyriofenone, pyroquilon, pyroxyfur, quinacetol, quinazamid, quinconazole, quinoxyfen, quintozene, rabenzazole, copper hydroxide, copper oxychloride, copper (I) oxide, copper sulfate, sedaxane, silthiofam, simeconazole, spiroxamine, streptomycin, tebuconazole, tebufloquin, tetraconazole, thiabendazole, thiadifluor, thicyofen, thifluzamide, thiophanate, thiophanate-methyl, thiram, tiadinil, tioxymid, tolclofos-methyl, tolylfluanid, triadimefon, triadimenol, triarimol, triazbutil, triazoxide, tricyclazole, tridemorf, trifloxystrobin, triflumizole, triforine, triticonazole, uniconazole, uniconazole-P, validamycin, valifenalate, vinclozolin, zineb, ziram, sulfur, zoxamide.

Examples of bactericides that can be added to the compositions containing at least one crystalline form I, II or III of copper salicylate are the following: bronopol, dichlorophen, nitrapyrina, nickel dimethyldithiocarbamate, kasugamycin, octhilinone, furancarboxylic acid, probenazole, streptomycin, tecloftalam, copper hydroxide, copper oxychloride, copper (I) oxide, copper sulfate.

Examples of fertilizers and biostimulants that can be added to the compositions containing at least one crystalline form I, II or III of copper salicylate are the following: mixtures of amino acids and/or oligopeptides of an animal and/or vegetable origin, 4-thiazolidinecarboxylic acid, 4-acetylthiazolidine-carboxylic acid, ectoin, phytosterols.

The above compositions are capable of exerting a bactericidal action that can be of a curative or preventive nature and generally have an extremely low or zero phytotoxicity with respect to the crops treated.

When the compositions comprise a crystalline form I, II or III of copper salicylate and at least a further known active principle, the weight ratios in the above compositions, between copper salicylate and the further known active principles, range according to the compounds selected and can normally be within the range of 1:100 to 100:1, preferably from 1:10 to 10:1.

The total concentration of active components in the above compositions can vary within a wide range; they generally range from 1% to 99% by weight with respect to the total weight of the composition, preferably from 5 to 90% by weight with respect to the total weight of the composition.

The crystalline forms I, II and/or III of copper salicylate or the compositions containing them can be applied to the crop via the leaves, or to the soil by means of fertigation, or incorporation into the ground, or through seed care.

A further object of the present invention therefore relates to a method for the control of bacteria in cultivated areas, which consists in applying effective and non-phytotoxic doses of compositions comprising at least one crystalline form I, II or III of copper salicylate and, optionally, one or more known active principles compatible therewith, on any part of the plant to be protected.

The quantity of compound to be applied for obtaining the desired effect can vary in relation to different factors such as, for example, the compound used, the crop to be protected, the degree of infestation, the climatic conditions, the characteristics of the soil, the method of application, etc.

Doses of copper salicylate ranging from 100 g to 2,000 g per hectare of agricultural crop or, in the case of compositions comprising other known active principles, overall doses of active principles ranging from 100 g to 2,000 g per hectare of agricultural crop, generally provide a sufficient control.

Doses of copper salicylate ranging from 100 g to 600 g per hectare of agricultural crop are preferably used.

The following illustrative examples are provided for a better understanding of the invention.

### EXPERIMENTAL PART

### EXAMPLE 1

### Preparation of the crystalline form I of copper salicylate

A solution of NH₄OH at 28%, 181 g (1.45 moles) in 300 ml was added to a suspension of salicylic acid, 100 g (0.724 moles) in 400 ml of water, until the complete solubilization had been obtained. An aqueous solution of CuCl₂, 97.3 g (0.724 moles) in 300 ml was then added and the system was left under stirring at room temperature for 8 hours. During the reaction time, the precipitation of a fine green solid first took place, whose colour then turned to ochre, accompanied by an increase in the viscosity and rise in the pH to a final value of about 6, requiring an adequate mixing system. The reaction mixture was ground and then filtered on a Buchner funnel. It was then washed with a large quantity of water to eliminate the ammonium chloride formed, and dried in air obtaining 150 g of the desired product.

The FT-IR spectrum indicated in Figure 1, was obtained from this product. The spectrum was recorded within the range of 4,000-400 cm⁻¹ in reflectance with an AVATAR 370 FT-IT Thermo-Nicolet instrument, effecting 64 scans. The sample was dispersed in KBr.

The XRD spectrum indicated in Figure 4, was obtained from this product. The following experimental conditions were used for the analysis:
Bruker AXS D8 Advance diffractometer; setting of the generator 40 kV, 40 mA; divergence slit = 0.3°; Goniometric radius = 300 mm; radiation Cu-Ka, λ= 1.5418 Å; position sensitive detector Lynx-eye; nickel filter on the diffracted beam. Geometry θ:θ; step scan with Δ2θ = 0.02°. Silicon sample-holder (monocrystal) 200 µ deep. Peak search and profile fitting with Fundamental Parameters Approach (Cheary & Coelho, 1992), with the program TOPAS-R (v. 3.0, Bruker).

The product of the present example has a particle-size distribution equal to about 6.17 µm for D₅₀, 1.95 µm for D₁₀ and 19.40 µm for D₉₀.

The term "D₅₀" represents the value of the diameter of the sieve which allows the passage of 50% of the particles.

The term "D₁₀" represents the value of the diameter of the sieve which allows the passage of 10% of the particles.

The term "D₉₀" represents the value of the diameter of the sieve which allows the passage of 90% of the particles.

The particle-size distribution was measured with a MALVERN MASTERSIZER instrument according to standard methods.

### EXAMPLE 2

### Preparation of the crystalline form I of copper salicylate

A solution of NaOH, 58 g (1.45 moles) in 300 ml was added to a suspension of salicylic acid, 100 g (0.724 moles) in 400 ml of water, until the complete solubilization had been obtained. An aqueous solution of CuSO₄, 180.8 g (0.724 moles) in 300 ml was then added and the system was left under stirring at room temperature for 8 hours. During the reaction time, the precipitation of a fine green solid first took place, whose colour then turned to ochre, accompanied by an increase in the viscosity and rise in the pH to a final value of about 6, requiring an adequate mixing system. The reaction mixture was ground and then filtered on a Buchner funnel. It was then washed with a large quantity of water to eliminate the ammonium chloride formed, and dried in air obtaining 150 g of the desired product.

### EXAMPLE 3

### Preparation of the crystalline form II of copper salicylate

70.6 g (0.724 moles) of Cu(OH)₂ were added, in portions, to a suspension of 100 g (0.724 moles) of salicylic acid in 1 1 of water, maintained at 60-65°C to increase its solubility, and the system was left under stirring at this temperature for 2 hours. During the reaction time, the precipitation of a dark green solid took place, accompanied by an increase in the pH to a final value of about 6. The reaction mixture thus obtained was filtered on a Buchner funnel and dried in air. Alternatively, the mixture can be used as slurry ready for the subsequent formulation.

The FT-IR spectrum indicated in Figure 2, was obtained from this product. The spectrum was recorded within the range of 4,000-400 cm⁻¹ in reflectance with an AVATAR 370 FT-IT Thermo-Nicolet instrument, effecting 64 scans. The sample was dispersed in KBr.

The XRD spectrum indicated in Figure 5, was obtained from this product. The following experimental conditions were used for the analysis:
Bruker AXS D8 Advance diffractometer; setting of the generator 40 kV, 40 mA; divergence slit = 0.3°; Goniometric radius = 300 mm; radiation Cu-Ka, λ= 1.5418 Å; position sensitive detector Lynx-eye; nickel filter on the diffracted beam. Geometry θ:θ; step scan with Δ2θ = 0.02°. Silicon sample-holder (monocrystal) 200 µ deep. Peak search and profile fitting with Fundamental Parameters Approach (Cheary & Coelho, 1992), with the program TOPAS-R (v. 3.0, Bruker).

The product obtained in the present example has a particle-size distribution equal to about 49.45 µm for D₅₀, 15.37 µm for D₁₀ and 100.30 µm for D₉₀.

The particle-size distribution was measured with a MALVERN MASTERSIZER instrument according to standard methods.

### EXAMPLE 4

### Preparation of the crystalline form III of copper salicylate

The solid obtained according to Example 1 or according to Example 2 was subjected to thermal treatment using an electric oven at a temperature equal to about 90°C until a homogeneous colour and constant weight had been reached. A solid having a brick-red colour was obtained.

The FT-IR spectrum indicated in Figure 3, was obtained from this product.

The spectrum was recorded within the range of 4000-400 cm⁻¹ in reflectance with an AVATAR 370 FT-IT Thermo-Nicolet instrument, effecting 64 scans. The sample was dispersed in KBr.

The XRD spectrum indicated in Figure 6, was obtained from this product. The following experimental conditions were used for the analysis:
Bruker AXS D8 Advance diffractometer; setting of the generator 40 kV, 40 mA; divergence slit = 0.3°; Goniometric radius = 300 mm; radiation Cu-Ka, λ= 1.5418 Å; position sensitive detector Lynx-eye; nickel filter on the diffracted beam. Geometry θ:θ; step scan with Δ2θ = 0.02°. Silicon sample-holder (monocrystal) 200 µ deep. Peak search and profile fitting with Fundamental Parameters Approach (Cheary & Coelho, 1992), with the program TOPAS-R (v. 3.0, Bruker).

### EXAMPLE 5

### Preparation of copper salicylate in the form of a wettable powder (WP).

A formulation in the form of a wettable powder at 50% by weight (WP) was prepared by mixing and suitably grinding the following ingredients:

| **INGREDIENTS** | **QUANTITY % (weight/weight)** |
|---|---|
| Technical copper salicylate at 99% | 50.5 |
| Crystalline form I Example 1 | (equal to 14.6% of Cu) |
| (Cu content = 29%) | |
| Sodium alkyl naphthalene sulfonate | 1.5 |
| Sodium polycarboxylate | 1.0 |
| Sodium ligninsulfonate | 3.0 |
| Silica | 1.0 |
| Calcium carbonate | complement to 100 |

### EXAMPLE 6

Another formulation was prepared as a wettable powder (WP), analogously to Example 5:

| **INGREDIENTS** | **QUANTITY % (weight/weight)** |
|---|---|
| Technical copper salicylate at 99% | 50.5 |
| Crystalline form I Example 1 | (equal to 14.6% of Cu) |
| (Cu content = 29%) | |
| Sodium alkyl naphthalene sulfonate | 1.0 |
| Sodium polycarboxylate | 2.0 |
| Calcium ligninsulfonate | 5.0 |
| Silica | 1.0 |
| Kaolin | complement to 100 |

### EXAMPLE 7

### Preparation of copper salicylate in the form of dispersible granules (WG).

A formulation in the form of dispersible granules at 20% of copper (WG) was prepared by adding the following ingredients to the slurry obtained in Example 1:

| **INGREDIENTS** | **QUANTITY % (weight/weight)** |
|---|---|
| Sodium alkyl naphthalene sulfonate | 2.3 |
| Sodium polynaphthalene sulfonate | 9.1 |
| Calcium ligninsulfonate | 11.4 |
| Kaolin | 48 |

The slurry thus prepared was granulated by evaporation of the water present (fluid-bed granulation), obtained the final WG with the following composition:

| **INGREDIENTS** | **QUANTITY % (weight/weight)** |
|---|---|
| Technical copper salicylate at 99% | 69 |
| Crystalline form I Example 2 | (equal to 20% of Cu) |
| (Cu content = 29%) | |
| Sodium alkyl naphthalene sulfonate | 1.0 |
| Sodium polycarboxylate | 4.0 |
| Calcium ligninsulfonate | 5.0 |
| Kaolin | complement to 100 |

### EXAMPLE 8

### Preparation of copper salicylate in the form of a concentrated aqueous suspension (SC).

A formulation in the form of a concentration aqueous suspension at 5% of copper (SC) was prepared by adding the following ingredients to the slurry obtained in Example 1:

| **INGREDIENTS** | **QUANTITY % (weight/weight)** |
|---|---|
| Technical copper salicylate at 99% | 17,4 |
| Crystalline form I Example 2 | (equal to 5% of Cu) |
| (Cu content = 29%) | |
| Sodium polynaphthalenemethane sulfonate | 4 |
| Calcium ligninsulfonate | 6 |
| Monopropylene glycol | 7 |
| Defoaming agent | 0.5 |
| Antibacterial agent | 0.25 |
| Xanthan gum | 5 |
| Water | complement to 100 |

### EXAMPLE 9

### Biological evaluation of the crystalline form I of copper salicylate on Pseudomonas syringae pv tomato

Tomato plants at the 4-leaf stage were transplanted in plots in a cold greenhouse, replicated four times and treated according to the protocol indicated in the following table with knapsack pumps, with a volume of 500 1 per hectare.

| Treatment | Conc. form (%) | Unit | Type | Quantity g a.i.*/100 1 | Quantity g p.f.**/100 1 |
|---|---|---|---|---|---|
| Control | - | - | - | - | - |
| Crystalline form I Example 1 | 5 | % W/W | SC | 25 | 500 |
| | | | | 12.5 | 250 |
| | | | | 6.25 | 125 |
| | | | | 3.125 | 62.5 |
| CU(OH)₂ | 40 | % W/W | WG | 25 | 62.5 |
| | | | | 12.5 | 31.25 |
| | | | | 6.25 | 15.625 |
| Salicylic acid | 100 | % W/W | TQ | 54.2 | 54.2 |
| | | | | 27.2 | 27.2 |
| | | | | 13.6 | 13.6 |

| | | | | | |
|---|---|---|---|---|---|
| * a.i. = active ingredient ** p.f. = finished product | | | | | |

In the above table, SC is an abbreviation of "concentrated aqueous suspension" and TQ of "as such".

The day after application, the plants were infected with a suspension of bacterial cells previously cultivated in Nutrient Broth culture broth, at a bacterium-broth concentration of 1:4.

The inoculum, kept under stirring for 2 days, was sprayed on the plants in the morning, in guttation phase, with knapsack sprayers.

Visual surveys were effected 7 days after each infection/treatment, analyzing 50 plants per plot, analyzing the percentage of plants infected and the percentage of leaf surface affected.

The results obtained are indicated in the following table:

| **Treatment** | **Quantity g a.i./100 l** | **Quantity infected plants (%)** | **Leaf surface affected (%)** |
|---|---|---|---|
| Control | - | 50.7 | 6.4 |
| Crystalline form I Example 1 | 25 | 26.3 | 2.3 |
| | 12.5 | 26.0 | 2.7 |
| | 6.25 | 12.5 | 1.7 |
| | 3.125 | 26.6 | 2.0 |
| Cu(OH)₂ | 25 | 31.0 | 3.9 |
| | 12.5 | 35.7 | 4.9 |
| | 6.25 | 37.5 | 3.4 |
| Salicylic acid | 54.2 | 36.3 | 3.5 |
| | 27.2 | 31.5 | 3.9 |
| | 13.6 | 40.7 | 4.7 |

It can be noted that the bactericidal activity of the crystalline form I of copper salicylate of Example 1 is much higher with respect to the activity of the single components of copper salicylate, i.e. salicylic acid and copper hydroxide.

Furthermore, the percentage of plants infected after the treatment with the crystalline form I of Example 1 at 6.25 g a.i./100 1 is about a third (12.5%) with respect to that after treatment with copper hydroxide (37.5%) with the same quantity of copper metal.

Finally, it should be pointed out that no symptom of phytotoxicity was observed in the four tests carried out with the crystalline form I of Example 1, unlike the single components that proved to be phytotoxic at high doses.

### EXAMPLE 10 (comparative)

### Biological evaluation of cupric salts of carboxylic acids on Pseudomonas syringae pv tomato

A comparison was effected between the bactericidal activity of various cupric salts of carboxylic acids described in patent application US2009/136581 with that of crystalline form I.

Tomato plants at the 4-leaf stage were transplanted in plots in a cold greenhouse, replicated four times and treated with the various compounds being tested by means of knapsack pumps, with a volume of 500 1 per hectare.
The day after application, the plants were infected with a suspension of bacterial cells previously cultivated in Nutrient Broth culture broth, at a bacterium-broth concentration of 1:4.

The inoculum, kept under stirring for 2 days, was sprayed on the plants in the morning, in guttation phase, with knapsack sprayers.

Visual surveys were effected 7 days after each infection/treatment, analyzing 10 plants per plot, analyzing the percentage of leaf surface affected.

The results obtained are indicated in the following table:

| Treatment | Dosage (ppm a.i.) | Leaf surface affected (%) | Phytotoxicity (%) |
|---|---|---|---|
| Control | | 50 | 0 |
| Crystalline form I Example 1 | 250 | 5 | 0 |
| Crystalline form II Example 3 | 250 | 5 | 0 |
| Copper glutarate | 250 | 69 | 0 |
| Copper malate | 250 | 5 | 20 |
| Copper succinate | 250 | 50 | 0 |
| Copper tartrate | 250 | 69 | 0 |

As can be noted, the only compound that allows an almost complete control of the bacteriosis is copper salicylate in both crystalline form I and in crystalline form II, as it demonstrated an excellent bactericidal efficacy (5% of the leaf surface affected corresponding to an activity of 95%) without showing phytotoxicity phenomena, unlike copper malate which, on the other hand, proved to be phytotoxic (20%) at the same dosage of use.

## Claims

1. Non-therapeutic use of at least one crystalline form of copper salicylate, with a molar ratio between copper and salicylic acid of (1:1), selected from crystalline form I, crystalline form II or crystalline form III and/or mixtures thereof; wherein crystalline form I is **characterized by** an orthorhombic crystalline structure, a crystal unit cell indicated hereunder in Table 1, a FTIR spectrum that has at least the absorption bands indicated hereunder in Table 2, an XRD spectrum that has at least the characteristic peaks indicated hereunder in Table 3 and, preferably, a particle-size distribution ranging from 1.95 µm to 19.40 µm, preferably equal to about 6.17 µm; wherein crystalline form II is **characterized by** a triclinic crystalline structure, a crystal unit cell indicated in Table 1 hereunder, a FTIR spectrum that has at least the absorption bands indicated in Table 2 hereunder, an XRD spectrum that has at least the characteristic peaks indicated in Table 3 hereunder and, preferably, a particle-size distribution ranging from 15.37 µm to 100.30 µm, preferably equal to about 49.45 µm; wherein crystalline form III is **characterized by** a two-dimensional crystalline structure, a crystal unit cell indicated in Table 1 hereunder, a FTIR spectrum that has at least the absorption bands indicated in Table 2 hereunder, an XRD spectrum that has at least the characteristic peaks indicated in Table 3 hereunder
**Table 1**
| Crystalline form | a, Å | b, Å | c, Å | α, ° | β, ° | γ, ° | V, Å³ | Z | V/Z, Å³ |
|---|---|---|---|---|---|---|---|---|---|
| I | 18.868 | 15.884 | 5.042 | 90 | 90 | 90 | 1507 | 8 | 188 |
| II | 7.322 | 10.677 | 15.580 | 70.67 | 83.82 | 76.31 | 1116.09 | 6 | 186 |
| III | 24.46 | - | 5.66 | - | 90 | - | - | - | - |
**Table 2**
| Crystalline form I | Crystalline form II | Crystalline form III |
|---|---|---|
| 3244.25 | 3371.87 | 3252.77 |
| 2929.28 | 3065.63 | 3067.12 |
| 1603.68 | 1623.17 | 2925.20 |
| 1558.03 | 1604.97 | 1603.32 |
| 1496.27 | 1590.00 | 1572.60 |
| 1470.55 | 1570.31 | 1558.81 |
| 1407.99 | 1472.32 | 1507.33 |
| 1248.06 | 1408.52 | 1471.60 |
| | 1253.54 | 1258.08 |
**Table 3**
| Crystalline form I (2θ, °) | Crystalline form II (2θ, °) | Crystalline form III (2θ, °) |
|---|---|---|
| 9.420 | 6.034 | 7.283 |
| 22.638 | 17.171 | 20.759 |
| 26.512 | 18.103 | 25.867 |
| 28.296 | 25.033 | - |
| 29.575 | 25.968 | - |
| - | 27.458 | - |
for the control of phytopathogenic bacteria.

2. Use according to claim 1, wherein the crystalline form is crystalline form I.

3. Use according to claim 1, wherein the crystalline form is crystalline form II.

4. Use according to claim 1, wherein the crystalline form is crystalline form III.

5. Use according to any of the previous claims, wherein one or more crystalline forms of copper salicylate are formulated in agronomic compositions, in a mixture with a solvent and/or diluent, possibly one or more surfactants and/or other agronomically acceptable coformulants.

6. Use according to claim 5, wherein the agronomic composition is formulated as dry powders, wettable powders, emulsifiable concentrates, microemulsions, pastes, granulates, solutions, suspensions.

7. Use according to any of the previous claims, wherein one or more crystalline forms of copper salicylate are formulated with at least a second active principle selected from insecticides, acaricides, nematocides, herbicides, fungicides, bactericides different from copper salicylate, fertilizers, biostimulants, preferably in a weight ratio between copper salicylate and the other active principles ranging from 1:100 to 100:1, more preferably from 1:10 to 10:1.

8. Use according to any of the previous claims, by the application of a crystalline form or an agronomic composition containing the crystalline form, to the crop via the leaves, or to the soil by means of fertigation, or incorporation into the ground, or through seed treatment.

9. A method for the control of bacteria in cultivated areas, which consists in applying effective and non-phytotoxic doses of compositions comprising at least one crystalline form I, II or III of copper salicylate, with a molar ratio between copper and salicylic acid of (1:1), selected from crystalline form I, crystalline form II or crystalline form III and/or mixtures thereof; wherein crystalline form I is **characterized by** an orthorhombic crystalline structure, a crystal unit cell indicated hereunder in Table 1, a FTIR spectrum that has at least the absorption bands indicated hereunder in Table 2, an XRD spectrum that has at least the characteristic peaks indicated hereunder in Table 3 and, preferably, a particle-size distribution ranging from 1.95 µm to 19.40 µm, preferably equal to about 6.17 µm; wherein crystalline form II is **characterized by** a triclinic crystalline structure, a crystal unit cell indicated in Table 1 hereunder, a FTIR spectrum that has at least the absorption bands indicated in Table 2 hereunder, an XRD spectrum that has at least the characteristic peaks indicated in Table 3 hereunder and, preferably, a particle-size distribution ranging from 15.37 µm to 100.30 µm, preferably equal to about 49.45 µm; wherein crystalline form III is **characterized by** a two-dimensional crystalline structure, a crystal unit cell indicated in Table 1 hereunder, a FTIR spectrum that has at least the absorption bands indicated in Table 2 hereunder, an XRD spectrum that has at least the characteristic peaks indicated in Table 3 hereunder
**Table 1**
| Crystalline form | a, Å | b, Å | c, Å | α, ° | β, ° | γ, ° | V, Å³ | Z | V/Z, Å³ |
|---|---|---|---|---|---|---|---|---|---|
| I | 18.868 | 15.884 | 5.042 | 90 | 90 | 90 | 1507 | 8 | 188 |
| II | 7.322 | 10.677 | 15.580 | 70.67 | 83.82 | 76.31 | 1116.09 | 6 | 186 |
| III | 24.46 | - | 5.66 | - | 90 | - | - | - | - |
**Table 2**
| Crystalline form I | Crystalline form II | Crystalline form III |
|---|---|---|
| 3244.25 | 3371.87 | 3252.77 |
| 2929.28 | 3065.63 | 3067.12 |
| 1603.68 | 1623.17 | 2925.20 |
| 1558.03 | 1604.97 | 1603.32 |
| 1496.27 | 1590.00 | 1572.60 |
| 1470.55 | 1570.31 | 1558.81 |
| 1407.99 | 1472.32 | 1507.33 |
| 1248.06 | 1408.52 | 1471.60 |
| | 1253.54 | 1258.08 |
**Table 3**
| Crystalline form I (2θ, °) | Crystalline form II (2θ, °) | Crystalline form III (2θ, °) |
|---|---|---|
| 9.420 | 6.034 | 7.283 |
| 22.638 | 17.171 | 20.759 |
| 26.512 | 18.103 | 25.867 |
| 28.296 | 25.033 | - |
| 29.575 | 25.968 | - |
| - | 27.458 | - |
and, optionally, one or more active principles compatible therewith, on any part of the plant to be protected.

## Patentansprüche

1. Nichttherapeutische Verwendung von zumindest einer kristallinen Form von Kupfersalicylat mit einem Molverhältnis zwischen Kupfer und Salicylsäure von (1:1), ausgewählt aus der kristallinen Form I, der kristallinen Form II oder der kristallinen Form III und/oder Gemischen davon; wobei die kristalline Form I durch eine orthorhombische kristalline Struktur, eine Kristalleinheitszelle, die hierin nachfolgend in Tabelle 1 dargelegt ist, ein FTIR-Spektrum, das zumindest die hierin nachfolgend in Tabelle 2 dargelegten Absorptionsbanden aufweist, ein XRD-Spektrum, das zumindest die hierin nachfolgend in Tabelle 3 dargelegten charakteristischen Peaks aufweist, und vorzugsweise eine Teilchengrößenverteilung im Bereich von 1,95 µm bis 19,40 µm, vorzugsweise gleich etwa 6,17 µm aufweist, gekennzeichnet ist; wobei die kristalline Form II durch eine triklinische kristalline Struktur, eine Kristalleinheitszelle, die hierin nachfolgend in Tabelle 1 dargelegt ist, ein FTIR-Spektrum, das zumindest die hierin nachfolgend in Tabelle 2 dargelegten Absorptionsbanden aufweist, ein XRD-Spektrum, das zumindest die hierin nachfolgend in Tabelle 3 dargelegten charakteristischen Peaks aufweist, und vorzugsweise eine Teilchengrößenverteilung im Bereich von 15,37 µm bis 100,30 µm, vorzugsweise gleich etwa 49,45 µm aufweist, gekennzeichnet ist; wobei die kristalline Form III durch eine zweidimensionale kristalline Struktur, eine Kristalleinheitszelle, die hierin nachfolgend in Tabelle 1 dargelegt ist, ein FTIR-Spektrum, das zumindest die hierin nachfolgend in Tabelle 2 dargelegten Absorptionsbanden aufweist, ein XRD-Spektrum, das zumindest die hierin nachfolgend in Tabelle 3 dargelegten charakteristischen Peaks aufweist, gekennzeichnet ist,
**Tabelle 1**
| Kristalline Form | a, Å | b, Å | c, Å | α,° | β,° | *y*,° | V,Å³ | Z | V/Z, Å³ |
|---|---|---|---|---|---|---|---|---|---|
| I | 18,868 | 15,884 | 5,042 | 90 | 90 | 90 | 1507 | 8 | 188 |
| II | 7,322 | 10,677 | 15,580 | 70,67 | 83,82 | 76,31 | 1116,09 | 6 | 186 |
| III | 24,46 | - | 5,66 | - | 90 | - | - | - | - |
**Tabelle 2**
| Kristalline Form I | Kristalline Form II | Kristalline Form III |
|---|---|---|
| 3244,25 | 3371,87 | 3252,77 |
| 2929,28 | 3065,63 | 3067,12 |
| 1603,68 | 1623,17 | 2925,20 |
| 1558,03 | 1604,97 | 1603,32 |
| 1496,27 | 1590,00 | 1572,60 |
| 1470,55 | 1570,31 | 1558,81 |
| 1407,99 | 1472,32 | 1507,33 |
| 1248,06 | 1408,52 | 1471,60 |
| | 1253,54 | 1258,08 |
**Tabelle 3**
| Kristalline Form I (2θ, °) | Kristalline Form II (2θ, °) | Kristalline Form III (2θ, °) |
|---|---|---|
| 9,420 | 6,034 | 7,283 |
| 22,638 | 17,171 | 20,759 |
| 26,512 | 18,103 | 25,867 |
| 28,296 | 25,033 | - |
| 29,575 | 25,968 | - |
| - | 27,458 | - |
zur Kontrolle von phytopathogenen Bakterien.

2. Verwendung nach Anspruch 1, wobei die kristalline Form kristalline Form I ist.

3. Verwendung nach Anspruch 1, wobei die kristalline Form kristalline Form II ist.

4. Verwendung nach Anspruch 1, wobei die kristalline Form kristalline Form III ist.

5. Verwendung nach einem der vorstehenden Ansprüche, wobei eine oder mehrere kristalline Formen von Kupfersalicylat in agronomischen Zusammensetzungen, in einem Gemisch mit einem Lösungsmittel und/oder einem Verdünnungsmittel, möglicherweise einem oder mehreren Tensiden und/oder anderen agronomisch annehmbaren Co-Formulierungsmitteln formuliert sind.

6. Verwendung nach Anspruch 5, wobei die agronomische Zusammensetzung als Trockenpulver, benetzbare Pulver, emulgierbare Konzentrate, Mikroemulsionen, Pasten, Granulat, Lösungen, Suspensionen formuliert ist.

7. Verwendung nach einem der vorstehenden Ansprüche, wobei eine oder mehrere kristalline Formen von Kupfersalicylat mit zumindest einem zweiten Wirkprinzip, das aus Insektiziden, Akariziden, Nematiziden, Herbiziden, Fungiziden, Bakteriziden, die kein Kupfersalicylat sind, Düngemitteln, Biostimulanzien ausgewählt sind, vorzugsweise in einem Gewichtsverhältnis zwischen Kupfersalicylat und den anderen Wirkprinzipien im Bereich von 1:100 bis 100:1, noch bevorzugter von 1:10 bis 10:1 formuliert sind.

8. Verwendung nach einem der vorstehenden Ansprüche durch Anwendung einer kristallinen Form oder einer agronomischen Zusammensetzung, die die kristalline Form enthält, über die Blätter auf die Nutzpflanze oder mittels Fertigation auf das Erdreich, oder durch Aufnahme in dem Boden oder durch Behandlung der Samen.

9. Verfahren zur Kontrolle von Bakterien in kultivierten Arealen, das aus dem Anwenden wirksamer und nichtphytotoxischer Dosen von Zusammensetzungen, umfassend zumindest eine kristalline Form I, II oder III von Kupfersalicylat mit einem Molverhältnis zwischen Kupfer und Salicylsäure von (1:1), ausgewählt aus der kristallinen Form I, der kristallinen Form II oder der kristallinen Form III und/oder Gemischen davon; wobei die kristalline Form I durch eine orthorhombische kristalline Struktur, eine Kristalleinheitszelle, die hierin nachfolgend in Tabelle 1 dargelegt ist, ein FTIR-Spektrum, das zumindest die hierin nachfolgend in Tabelle 2 dargelegten Absorptionsbanden aufweist, ein XRD-Spektrum, das zumindest die hierin nachfolgend in Tabelle 3 dargelegten charakteristischen Peaks aufweist, und vorzugsweise eine Teilchengrößenverteilung im Bereich von 1,95 µm bis 19,40 µm, vorzugsweise gleich etwa 6,17 µm aufweist, gekennzeichnet ist; wobei die kristalline Form II durch eine triklinische kristalline Struktur, eine Kristalleinheitszelle, die hierin nachfolgend in Tabelle 1 dargelegt ist, ein FTIR-Spektrum, das zumindest die hierin nachfolgend in Tabelle 2 dargelegten Absorptionsbanden aufweist, ein XRD-Spektrum, das zumindest die hierin nachfolgend in Tabelle 3 dargelegten charakteristischen Peaks aufweist, und vorzugsweise eine Teilchengrößenverteilung im Bereich von 15,37 µm bis 100,30 µm, vorzugsweise gleich etwa 49,45 µm aufweist, gekennzeichnet ist; wobei die kristalline Form III durch eine zweidimensionale kristalline Struktur, eine Kristalleinheitszelle, die hierin nachfolgend in Tabelle 1 dargelegt ist, ein FTIR-Spektrum, das zumindest die hierin nachfolgend in Tabelle 2 dargelegten Absorptionsbanden aufweist, ein XRD-Spektrum, das zumindest die hierin nachfolgend in Tabelle 3 dargelegten charakteristischen Peaks aufweist, gekennzeichnet ist,
**Tabelle 1**
| Kristalline Form | a, Å | b, Å | c, Å | α,° | β,° | *y*,° | V,Å³ | Z | V/Z, Å³ |
|---|---|---|---|---|---|---|---|---|---|
| I | 18,868 | 15,884 | 5,042 | 90 | 90 | 90 | 1507 | 8 | 188 |
| II | 7,322 | 10,677 | 15,580 | 70,67 | 83,82 | 76,31 | 1116,09 | 6 | 186 |
| III | 24,46 | - | 5,66 | - | 90 | - | - | - | - |
**Tabelle 2**
| Kristalline Form I | Kristalline Form II | Kristalline Form III |
|---|---|---|
| 3244,25 | 3371,87 | 3252,77 |
| 2929,28 | 3065,63 | 3067,12 |
| 1603,68 | 1623,17 | 2925,20 |
| 1558,03 | 1604,97 | 1603,32 |
| 1496,27 | 1590,00 | 1572,60 |
| 1470,55 | 1570,31 | 1558,81 |
| 1407,99 | 1472,32 | 1507,33 |
| 1248,06 | 1408,52 | 1471,60 |
| | 1253,54 | 1258,08 |
**Tabelle 3**
| Kristalline Form I (2θ, °) | Kristalline Form II (2θ, °) | Kristalline Form III (2θ, °) |
|---|---|---|
| 9,420 | 6,034 | 7,283 |
| 22,638 | 17,171 | 20,759 |
| 26,512 | 18,103 | 25,867 |
| 28,296 | 25,033 | - |
| 29,575 | 25,968 | - |
| - | 27,458 | - |
und gegebenenfalls eines oder mehrerer damit kompatibler Wirkprinzipien auf einen beliebigen Teil der zu schützenden Pflanze besteht.

## Revendications

1. Utilisation non thérapeutique d'au moins une forme cristalline du salicylate de cuivre, avec un rapport molaire entre le cuivre et l'acide salicylique de (1:1), sélectionnée parmi la forme cristalline I, la forme cristalline II ou la forme cristalline III et/ou leurs mélanges ; dans laquelle la forme cristalline I est **caractérisée par** une structure cristalline orthorhombique, une cellule unitaire cristalline indiquée ci-dessous dans le Tableau 1, un spectre infrarouge par transformée de Fourier (FTIR) qui possède au moins les bandes d'absorption indiquées ci-dessous dans le Tableau 2, un spectre de diffraction des rayons X (DRX) qui possède au moins les pics caractéristiques indiqués ci-dessous dans le Tableau 3 et, de préférence, une distribution de taille de particules allant de 1,95 µm à 19,40 µm, de préférence égale à environ 6,17 µm ; dans laquelle la forme cristalline II est **caractérisée par** une structure cristalline triclinique, une cellule unitaire cristalline indiquée dans le Tableau 1 ci-dessous, un spectre FTIR qui possède au moins les bandes d'absorption indiquées dans le Tableau 2 ci-dessous, un spectre DRX qui possède au moins les pics caractéristiques indiqués dans le Tableau 3 ci-dessous et, de préférence, une distribution de taille de particules allant de 15,37 µm à 100,30 µm, de préférence égale à environ 49,45 µm ; dans laquelle la forme cristalline III est **caractérisée par** une structure cristalline bidimensionnelle, une cellule unitaire cristalline indiquée dans le Tableau 1 ci-dessous, un spectre FTIR qui possède au moins les bandes d'absorption indiquées dans le Tableau 2 ci-dessous, un spectre DRX qui possède au moins les pics caractéristiques indiqués dans le Tableau 3 ci-dessous
**Tableau 1**
| Forme cristalline | a, Å | b, Å | c, Å | α, ° | β, ° | γ, ° | V, Å³ | Z | v/z, Å³ |
|---|---|---|---|---|---|---|---|---|---|
| I | 18,868 | 15,884 | 5,042 | 90 | 90 | 90 | 1507 | 8 | 188 |
| II | 7,322 | 10,677 | 15,580 | 70,67 | 83,82 | 76,31 | 1116,09 | 6 | 186 |
| III | 24,46 | - | 5,66 | - | 90 | - | - | - | - |
**Tableau 2**
| Forme cristalline I | Forme cristalline II | Forme cristalline III |
|---|---|---|
| 3244,25 | 3371,87 | 3252,77 |
| 2929,28 | 3065,63 | 3067,12 |
| 1603,68 | 1623,17 | 2925,20 |
| 1558,03 | 1604,97 | 1603,32 |
| 1496,27 | 1590,00 | 1572,60 |
| 1470,55 | 1570,31 | 1558,81 |
| 1407,99 | 1472,32 | 1507,33 |
| 1248,06 | 1408,52 | 1471,60 |
| | 1253,54 | 1258,08 |
**Tableau 3**
| Forme cristalline I (2θ, °) | Forme cristalline II (2θ, °) | Forme cristalline III (2θ, °) |
|---|---|---|
| 9,420 | 6,034 | 7,283 |
| 22,638 | 17,171 | 20,759 |
| 26,512 | 18,103 | 25,867 |
| 28,296 | 25,033 | - |
| 29,575 | 25,968 | - |
| - | 27,458 | - |
pour la lutte contre les bactéries phytopathogènes.

2. Utilisation selon la revendication 1, dans laquelle la forme cristalline est la forme cristalline I.

3. Utilisation selon la revendication 1, dans laquelle la forme cristalline est la forme cristalline II.

4. Utilisation selon la revendication 1, dans laquelle la forme cristalline est la forme cristalline III.

5. Utilisation selon l'une quelconque des revendications précédentes, dans laquelle une ou plusieurs formes cristallines du salicylate de cuivre sont formulées dans des compositions agronomiques, en mélange avec un solvant et/ou un diluant, éventuellement un ou plusieurs tensioactifs et/ou d'autres agents de co-formulation acceptables en agronomie.

6. Utilisation selon la revendication 5, dans laquelle la composition agronomique est formulée sous la forme de poudres sèches, de poudres mouillables, de concentrés émulsionnables, de microémulsions, de pâtes, de granulés, de solutions, de suspensions.

7. Utilisation selon l'une quelconque des revendications précédentes, dans laquelle une ou plusieurs formes cristallines du salicylate de cuivre sont formulées avec au moins un second principe actif sélectionné parmi les insecticides, les acaricides, les nématocides, les herbicides, les fongicides, les bactéricides différents du salicylate de cuivre, les engrais, les biostimulants, de préférence dans un rapport de poids entre le salicylate de cuivre et les autres principes actifs allant de 1:100 à 100:1, plus préférentiellement de 1:10 à 10:1.

8. Utilisation selon l'une quelconque des revendications précédentes, par l'application d'une forme cristalline ou d'une composition agronomique contenant la forme cristalline, sur la culture via les feuilles, ou dans le sol au moyen d'une irrigation fertilisante, ou d'une incorporation dans le sol, ou par traitement des semences.

9. Procédé de lutte contre les bactéries dans des zones cultivées, qui consiste à appliquer des doses efficaces et non phytotoxiques de compositions comprenant au moins une forme cristalline I, II ou III du salicylate de cuivre, avec un rapport molaire entre le cuivre et l'acide salicylique de (1:1), sélectionnée parmi la forme cristalline I, la forme cristalline II ou la forme cristalline III et/ou leurs mélanges ; dans laquelle la forme cristalline I est **caractérisée par** une structure cristalline orthorhombique, une cellule unitaire cristalline indiquée ci-dessous dans le Tableau 1, un spectre FTIR qui possède au moins les bandes d'absorption indiquées ci-dessous dans le Tableau 2, un spectre DRX qui possède au moins les pics caractéristiques indiqués ci-dessous dans le Tableau 3 et, de préférence, une distribution de taille de particules allant de 1,95 µm à 19,40 µm, de préférence égale à environ 6,17 µm ; dans laquelle la forme cristalline II est **caractérisée par** une structure cristalline triclinique, une cellule unitaire cristalline indiquée dans le Tableau 1 ci-dessous, un spectre FTIR qui possède au moins les bandes d'absorption indiquées dans le Tableau 2 ci-dessous, un spectre DRX qui possède au moins les pics caractéristiques indiqués dans le Tableau 3 ci-dessous et, de préférence, une distribution de taille de particules allant de 15,37 µm à 100,30 µm, de préférence égale à environ 49,45 µm ; dans laquelle la forme cristalline III est **caractérisée par** une structure cristalline bidimensionnelle, une cellule unitaire cristalline indiquée dans le Tableau 1 ci-dessous, un spectre FTIR qui possède au moins les bandes d'absorption indiquées dans le Tableau 2 ci-dessous, un spectre DRX qui possède au moins les pics caractéristiques indiqués dans le Tableau 3 ci-dessous
**Tableau 1**
| Forme cristalline | a, Å | b, Å | c, Å | α, ° | β, ° | *γ*, ° | V, Å³ | Z | v/z, Å³ |
|---|---|---|---|---|---|---|---|---|---|
| I | 18,868 | 15,884 | 5,042 | 90 | 90 | 90 | 1507 | 8 | 188 |
| II | 7,322 | 10,677 | 15,580 | 70,67 | 83,82 | 76,31 | 1116,09 | 6 | 186 |
| III | 24,46 | - | 5,66 | - | 90 | - | - | - | - |
**Tableau 2**
| Forme cristalline I | Forme cristalline II | Forme cristalline III |
|---|---|---|
| 3244,25 | 3371,87 | 3252,77 |
| 2929,28 | 3065,63 | 3067,12 |
| 1603,68 | 1623,17 | 2925,20 |
| 1558,03 | 1604,97 | 1603,32 |
| 1496,27 | 1590,00 | 1572,60 |
| 1470,55 | 1570,31 | 1558,81 |
| 1407,99 | 1472,32 | 1507,33 |
| 1248,06 | 1408,52 | 1471,60 |
| | 1253,54 | 1258,08 |
**Tableau 3**
| Forme cristalline I (2θ, °) | Forme cristalline II (2θ, °) | Forme cristalline III (2θ, °) |
|---|---|---|
| 9,420 | 6,034 | 7,283 |
| 22,638 | 17,171 | 20,759 |
| 26,512 | 18,103 | 25,867 |
| 28,296 | 25,033 | - |
| 29,575 | 25,968 | - |
| - | 27,458 | - |
et, facultativement, un ou plusieurs principes actifs compatibles avec celle-ci, sur une quelconque partie de la plante à protéger.
